Europäisches Patentamt

**European Patent Office**

**Office européen des brevets**

(11) Numéro de publication: **0 239 168 B1**

(12) **FASCICULE DE BREVET EUROPEEN**

(45) Date de publication de fascicule du brevet: **04.03.92** (51) Int. Cl.5: **G06F 7/48**, G06F 7/50, H03K 19/017

(21) Numéro de dépôt: **87200502.0**

(22) Date de dépôt: **19.03.87**

(54) **Circuit arithmétique et logique.**

(30) Priorité: **28.03.86 FR 8604506**

(43) Date de publication de la demande:
**30.09.87 Bulletin 87/40**

(45) Mention de la délivrance du brevet:
**04.03.92 Bulletin 92/10**

(84) Etats contractants désignés:
**DE FR GB IT NL**

(56) Documents cités:
**EP-A- 0 164 450**
**FR-A- 2 516 675**
**US-A- 4 498 135**

(73) Titulaire: **PHILIPS COMPOSANTS**
**117, quai du Président Roosevelt**
**F-92130 Issy les Moulineaux(FR)**
(84) Etats contractants désignés:
**FR**

(73) Titulaire: **N.V. Philips' Gloeilampenfabrieken**
**Groenewoudseweg 1**
**NL-5621 BA Eindhoven(NL)**
(84) Etats contractants désignés:
**DE GB IT NL**

(72) Inventeur: **Lanfranca, Michel Société Civile S.P.I.D.**
**209, rue de l'Université**
**F-75007 Paris(FR)**
Inventeur: **Labrousse, Michel Société Civile S.P.I.D.**
**209, rue de l'Université**
**F-75007 Paris(FR)**
Inventeur: **Deneuchatel, Christian Société Civile S.P.I.D.**
**209, rue de l'Université**
**F-75007 Paris(FR)**

(74) Mandataire: **Caron, Jean et al**
**Société Civile S.P.I.D. 156, Boulevard Haussmann**
**F-75008 Paris(FR)**

Rank Xerox (UK) Business Services

## Description

La présente invention concerne un étage de circuit pour réaliser des opérations à partir de données d'entrée arithmétiques et/ou logiques A et B, en prenant en compte une éventuelle retenue provenant d'un étage précédent, et fournir un résultant de l'opération ainsi qu'une éventuelle retenue à transmettre à l'étage suivant, comportant un dispositif programmable de prétraitement des données constitué d'un réseau de transistors MOS fournissant sur une "connexion logique" la combinaison logique $\overline{P} = \alpha.A.B + \beta.A.\overline{B} + \gamma.\overline{A}.B + \delta.\overline{A}.\overline{B}$, $\alpha$, $\beta$, $\gamma$, $\delta$, étant des paramètres de programmation, un dispositif de propagation de la retenue constitué d'un transistor MOS inséré dans une chaîne de propagation de la retenue d'un étage au suivant, la sortie de la chaîne étant en outre préchargée au cours d'un temps d'horloge dans chaque étage, un dispositif de génération de retenue exclusive de la propagation, qui comporte un transistor de décharge de la chaîne, et un dispositif engendrant le résultat logique du circuit.

Un tel circuit est utilisé dans les unités arithmétiques et logiques de calculateurs, en particulier dans les microprocesseurs.

De tels circuits sont décrits dans une communication intitulée : "A comparison of ALU structures for VLSI technology" de Ong & Atkins au "16e symposium on computer arithmétics" tenu de 20 au 22 juin 1983 à Arrhus (DK), publié par l'I.E.E.E., qui décrit un dispositif comportant un bloc logique programmable de prétraitement des données destiné au calcul de la retenue, avec une chaîne de propagation de retenue, et un autre bloc logique pour le calcul d'un résultat.

Le document US-A-4498135 concerne un circuit pour réaliser des opérations à partir de données d'entrée arithmétiques et/ou logiques comprenant un dispositif de génération de retenue comportant trois transistors et un inverseur.

L'invention se propose de simplifier de réalistion d'un circuit arithmétique et logique qui comporte les dispositifs cités ci-dessus. Le but est d'obtenir une surface minimale d'un cristal semiconducteur dans lequel est intégré le circuit.

A cet effet le circuit selon l'invention est notamment remarquable en ce que le dispositif de génération de retenue est constitué d'au moins deux transistors MOS, en série entre la sortie de la chaîne de propagation de retenue et un point de potentiel correspondant au niveau logique bas, dont les grilles sont reliées respectivement à l'une des entrées de données et à la connexion portant ladite combinaison logique, et en ce que le transistor de propagation de retenue à sa grille reliée par un inverseur à ladite connexion portant la combinaison logique.

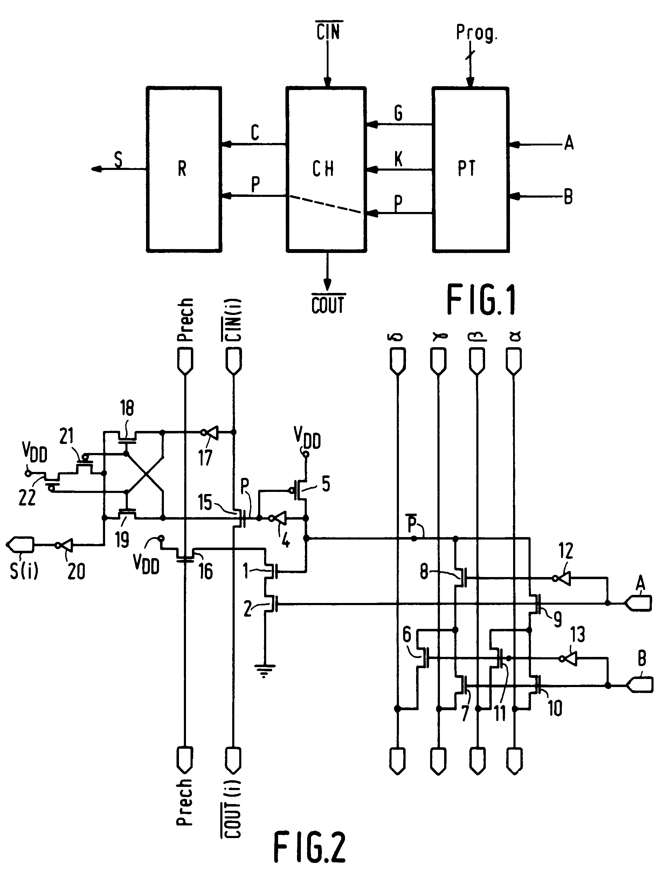

Ainsi, au lieu de comporter un circuit de calcul d'une combinaison logique pour la fourniture de résultat de l'étage, et un autre circuit pour le calcul de la retenue, un circuit commun est utilisé et seulement un transistor est ajouté pour remplir la fonction complète. L'invention considère donc l'interaction entre les différents circuits et obtient, grâce à la suppression d'un réseau logique, que l'ensemble des circuits est réduit. Ceci sera expliqué plus en détail en regard de la figure 1.

Dans le cas particulier ou le circuit selon l'invention fait partie d'un bloc logique à sélection de retenue, et comporte à cet effet deux chaînes de propagation de retenue et deux dispositifs de génération de retenue, il est notamment remarquable en ce que, l'un de ces deux dispositifs étant constitué des deux susdits transistors MOS en série entre la première chaîne de propagation et le potentiel logique bas, et la grille du transistor dont le drain est directement relié à cette chaîne étant reliée à ladite connexion logique, l'autre dispositif de génération est constitué d'un seul transistor, dont la grille est également reliée à ladite connexion logique, et qui est branché entre l'autre chaîne de propagation et la source du transistor dont le drain est relié à la première chaîne de propagation.

On a donc réalisé un circuit pour sélection de retenue en ajoutant seulement un transistor au dispositif de génération de retenue.

La description qui va suivre, en regard des dessins annexés décrivant des exemples non limitatifs fera bien comprendre comment l'invention peut être réalisée.

La figure 1 représente un bloc diagramme d'un circuit de l'art antérieur.

La figure 2 est un schéma électrique d'un étage selon l'invention, à simple propagation de retenue.

La figure 3 est un schéma électrique d'un étage selon l'invention, prévu pour une sélection de retenue.

Le circuit circuit de la figure 1 est un étage d'une unité qui en comporte une pluralité. L'unité traite deux mots de n bits, et elle comporte n étages de circuit de ce type. Sur l'entrée A est présent un bit de l'un des deux mots correspondant au rang de l'étage considéré, et sur l'entrée B le bit correspondant de l'autre mot.

Les entrées A et B combinées avec des lignes de programmation "Prog" engendrent les signaux fournis par le dispositif PT :
-   P est la "condition de propagation" : une retenue est propagée de l'étage précédent vers le suivant.
-   G est la "condition de génération" : la retenue en sortie de l'étage considérée $\overline{COUT}$ est active, quelle

2

que soit la retenue à l'entrée $\overline{\text{CIN}}$ (la retenue est active quand $\overline{\text{CIN}}$ (ou $\overline{\text{COUT}}$) est au niveau bas).

On prévoit aussi parfois un signal K entraînant l'absence d'une retenue, quelle que soit la retenue $\overline{\text{CIN}}$. Toutefois ce signal est redondant, car on peut admettre que si P et G sont tous deux inactifs, c'est qu'il ne doit pas y avoir de retenue.

Un mode de réalisation minimum utilise généralement une disposition pour gérer la propagation de la retenue, connue sous le nom anglais "manchester carry ripple" : La chaîne de propagation de retenue comporte simplement un transistor commandé par le signal P, placé en série entre $\overline{\text{CIN}}$ et $\overline{\text{COUT}}$ pour commander la propagation, et un transistor commandé par le signal G, disposé entre $\overline{\text{COUT}}$ et un point au niveau logique bas, en général appelé "masse", pour imposer un niveau bas en sortie. Si P et G sont tous deux à zéro, la sortie $\overline{\text{COUT}}$ est au niveau haut. Jusqu'à présent l'approche adoptée pour concevoir un tel circuit consistait à utiliser dans le dispositif programmable PT un ensemble logique pour engendrer le signal P et un deuxième ensemble logique pour engendrer le signal G.

Le dispositif R enfin est un circuit de calcul du bit résultat de l'étage, qui utilise le même signal P que l'étage CH, en combinaison avec un vecteur de retenue C.

La figure 2 montre le détail d'un mode de réalisation de l'invention, dans lequel deux des trois blocs de la figure 1 sont imbriqués.

Les lignes de programmation $\alpha$, $\beta$, $\gamma$, $\delta$ attaquent un réseau de portes logiques constituées chacune par un transistor N-MOS : la ligne $\delta$ est reliée à la source du transistor 6, la ligne $\gamma$ à celle du transistor 7, la ligne $\beta$ à celle du transistor 11, et la ligne $\alpha$ à celle du transistor 10. Le drain du transistor 6 est réuni à celui de transistor 7 et à la source du transistor 8 dont le drain est réuni à une "connexion logique" sur laquelle est engendré le signal $\overline{\text{P}}$. De même le drain du transistor 11 est réuni à celui du transistor 10 et à la source du transistor 9 dont le drain est réuni à la connexion logique $\overline{\text{P}}$. Les grilles des transistors 6 et 11 sont réunies à l'entrée binaire B via un inverseur 13, celles des transistors 7 et 10 sont connectées à l'entrée B, celle du transistor 9 est connectée à l'entrée binaire A et celle du transistor 8 est relieé, via un inverseur 12, à l'entrée A.

Avec seulement les six transistors 6 à 11, et les deux inverseurs 12, 13, l'application linéaire complète :

$$\overline{\text{P}} = \alpha.\text{A.B.} + \beta.\text{A.}\overline{\text{B}} + \gamma.\overline{\text{A}}.\text{B} + \delta.\overline{\text{A}}.\overline{\text{B}}$$

peut être réalisée.

Un inverseur supplémentaire 4 donne le signal P. Cet inverseur est rebouclé par un transistor p-mos 5 pour améliorer le niveau haut du signal. Ainsi cet inverseur a son entrée $\overline{\text{P}}$ reliée à une source de tension au niveau logique haut ($V_{DD}$) par un transistor 5 de polarité opposée à celle des transistors du réseau logique et de propagation, et dont la grille est reliée à la sortie dudit inverseur. Le transistor p-mos 5 est juste assez actif pour procurer un bon signal haut après le réseau N-mos; il est utilisé à la place d'une charge statique ou reliée à une horloge.

L'inverseur 4 relie la ligne logique $\overline{\text{P}}$ à la grille d'un transistor N-MOS 15, inséré entre l'entrée de retenue $\overline{\text{CIN}}$ et la sortie de retenue $\overline{\text{COUT}}$ et qui constitue un élément d'une chaine de propagation de retenue d'un étage à l'autre.

Le circuit est relié à une horloge (non représentée) par une ligne "Prech". Lors d'un premier temps cette ligne est au niveau logique haut et le transistor NMOS 16 est passant, (sa grille est reliée à la ligne "Prech") et relie donc un point au niveau haut (l'alimentation $V_{DD}$), connecté à son drain, à la sortie $\overline{\text{COUT}}$, reliée à sa source. Au cours d'un deuxième temps la ligne "Prech" est à zéro et la sortie $\overline{\text{COUT}}$ est isolée de $V_{DD}$.

C'est à ce moment que les opération logiques du circuit sont réalisées. On se rend facilement compte que si un niveau haut est souhaité pour $\overline{\text{COUT}}$, il suffit de ne pas décharger la ligne $\overline{\text{COUT}}$, en d'autres termes il suffit de ne rien faire. C'est pourquoi le signal K de la figure 1 n'est pas utile ici. Rappelons que $\overline{\text{CIN}}$ et $\overline{\text{COUT}}$ sont au niveau bas lorsqu'une retenue est présente.

La sortie $\overline{\text{COUT}}$ peut être déchargée par différents moyens : soit P = 1 et un zéro sur $\overline{\text{CIN}}$ peut être propagé, soit P = O ($\overline{\text{P}}$ = 1) et un circuit spécifique appelé "générateur de retenue" peut engendrer une retenue $\overline{\text{COUT}}$ en déchargeant la ligne $\overline{\text{COUT}}$.

Ce générateur de retenue est constitué par les deux transistors NMOS 1, 2 en série entre la sortie $\overline{\text{COUT}}$ de retenue et un point de potentiel correspondant au niveau logique bas ("masse"), dont les grilles sont reliées respectivement à l'une des entrées de données (A) et à la connexion portant ladite combinaison logique ($\overline{\text{P}}$). En outre un troisième transistor peut être placé en série avec les deux autres, sa grille étant reliée à une ligne d'inhibition. Une telle ligne a pour but d'inhiber toute production de retenue un bloquant le troisième transistor dans chaque étage, quelle que soit la combinaison logique $\overline{\text{P}}$, par exemple dans le cas d'opérations logiques et non pas arithmétiques, et n'a rien à voir avec le signal K de la figure 1,

3

lequel dépend des entrées A et B. Dans le cas qui nous intéresse ci, où la génération d'une retenue doit être calculée, le troisième transistor serait toujours conducteur et ne jouerait aucun rôle.

Il est facile de vérifier que le réseau logique et le générateur de retenue ci-dessus remplissent les fonctions suivantes :

$$\overline{P} = \alpha.A.B + \beta.A.\overline{B} + \gamma.\overline{A}.B + \delta.\overline{A}.\overline{B}$$

$$\overline{COUT} = \overline{(A.\overline{P}.I/)}.\overline{(P+CIN)}$$

ou bien COUT = A.I.$\overline{P}$ + P.CIN ou I = INHIBIT (dans le cas où un troisième transistor est mis en série avec les transistors 1 et 2).

Il faut remarquer que l'équation linéaire P($\alpha$, $\beta$, $\gamma$, $\delta$) permet seize combinaisons : seulement huit sont réellement utilisées ici, mais on pourrait imaginer un circuit plus universel. Les résultats d'opération suivants sont obtenus =

| | INHIBIT | | | | S(i) | $\overline{COUT}$ | Générateur de retenue | Signal logique $\overline{P}$ |
|---|---|---|---|---|---|---|---|---|
| $\alpha$ | $\beta$ | $\gamma$ | $\delta$ | | | | | |
| 1 | 0 | 0 | 1 | 1 | addition | $\overline{A.B.CIN+A.\overline{B}}$ | A.B | $A.\overline{B}+\overline{A}.\overline{B}= \overline{A \text{ ou } B}$ excl |
| 0 | 1 | 1 | 0 | 1 | soustract. | $\overline{\overline{A}.\overline{B}.CIN+\overline{A}.\overline{B}}$ | $\overline{A}.B$ | $\overline{A}.B+B.\overline{A}$ |
| 0 | 1 | 0 | 1 | 1 | $\overline{A}$ décalé | $\overline{A}$ | A | 1 Si B=0 |
| 1 | 1 | 0 | 0 | 0 | A | 1 | 0 | A |
| 0 | 0 | 0 | 1 | 0 | A ou B | 1 | 0 | $\overline{A}.\overline{B}$ |
| 1 | 0 | 0 | 1 | 0 | A ou B excl | 1 | 0 | $A.\overline{B}+\overline{A}.\overline{B}$ |
| 0 | 1 | 1 | 1 | 0 | A et B | 1 | 0 | $\overline{A}.\overline{B}$ |
| 1 | 1 | 0 | 1 | 0 | A et $\overline{B}$ | 1 | 0 | $A.\overline{B}$ |

On peut constater que les équations logiques définissant respectivement $\overline{COUT}$ et $\overline{P}$ sont notablement différentes. C'est la raison pour laquelle, dans l'art antérieur, le transistor 1, qui est seul présent, a sa grille reliée à un deuxième réseau logique du même genre que le réseau 6-13, mais dont la fonction logique (table de vérité) est différente. On a constaté qu'en fait, en série avec le transistor 1, un simple transistor 2 dont la grille est reliée à A suffit pour engendrer les fonctions complexes définissant $\overline{COUT}$, et ceci aussi bien pour l'addition (ligne 1 du tableau) que pour la soustraction (ligne 2) et le décalage (ligne 3). Bien entendu la grille du transistor 2 pourrait aussi bien être reliée à B, à condition d'intervertir les termes de la soustraction, et d'utiliser le registre fournissant B lorsqu'on veut obtenir un décalage.

En ce qui concerne la ligne 3, une variante qui procure le même résultat consiste à utiliser les ligne $\alpha$, $\beta$ au lieu des lignes $\beta$, $\delta$, mais avec B = 1.

La dernière partie du circuit est un montage OU exclusif entre CIN et P qui engendre le résultat logique. Le signal CIN est obtenu à la sortie de l'inverseur 17 à partir de $\overline{CIN}$. Le signal CIN est appliqué à la grille du transistor NMOS 19 et à la source du transistor NMOS 18. Le signal P est appliqué à la grille du transistor 18 et à la source du transistor 19. Les draines des deux transistors sont réunis ensemble, et à la sortie de résultat S(i), via un inverseur 20. Deux transistors P-MOS 21, 22 en série à partir de $V_{DD}$ sont reliés au point commun des drains des transistors 18, 19, et leurs grilles sont reliées respectivement au signal P et au signal CIN. Si les deux signaux CIN et P sont à zéro, les transistors 18, 19 sont bloqués et leur drain est "tiré" vers $V_{DD}$ par les transistors 21, 22 qui eux, étant de polarité opposée à celle des transistors 18, 19, sont passants. Si CIN et P sont hauts, les transistors 18, 19 sont passants et transmettent tous deux le niveau haut. Si CIN est haut et P bas, le transistor 19 transmet le zéro de P, et si P est haut et CIN est bas, le transistor 18 transmet le zéro de CIN. La sortie de l'inverseur 20 est donc haut si le couple CIN-P a des valeurs 0-1 ou 1-0, et basse pour 0-0 et 1-1. La sortie S(i) délivre donc le signal CIN $\oplus$ P.

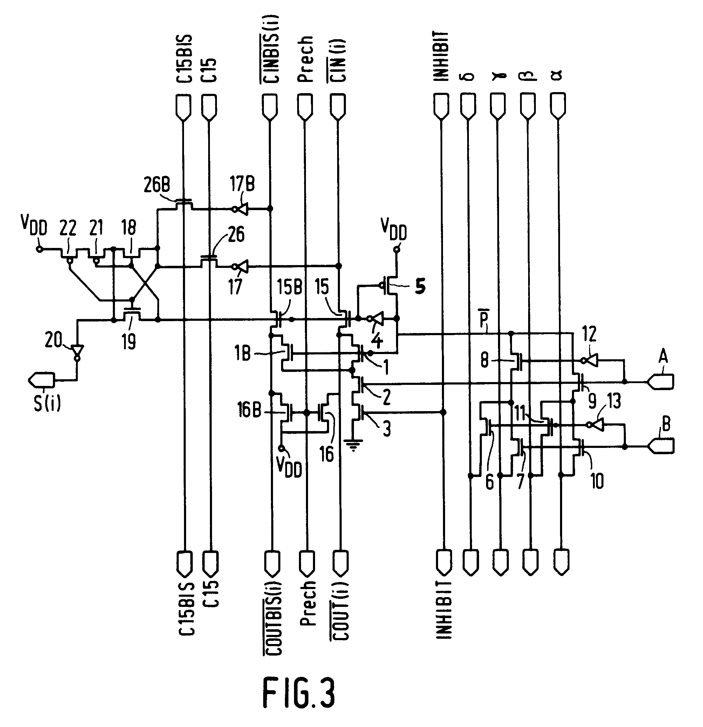

La figure 3 représente un circuit du même genre, mais prévu pour mettre en oeuvre un dispositif de sélection de retenue. On entend par là qu'au lieu de prévoir une chaîne propageant la retenue d'un étage au suivant, et avec laquelle chaque étage doit attendre le résultat de l'étage précédent, on prévoit deux chaînes dont l'une introduit une retenue et l'autre une "non-retenue". Alors les calculs sont faits dans l'étage en même temps que dans l'étage précédent, après quoi, le résultat (retenue) de l'étage précédent étant disponible, on n'a plus qu'à choisir entre les deux chaînes. Le circuit de la figure 3 comporte donc deux chaînes de propagation reliant deux entrées de retenue $\overline{CIN}$, $\overline{CINBIS}$ à deux sorties de retenue $\overline{COUT}$, $\overline{COUTBIS}$.

Les éléments de la figure 3 qui ne diffèrent pas de ceux de la figure 2 portent les mêmes références et ne seront pas décrits à nouveau. Le circuit présenté dans la figure 3 comporte le troisième transistor 3 qui a été mentionné plus haut, qui est controlé par un signal INHIBIT et dont la grille est à cet effet reliée à la ligne d'inhibition INHIBIT. Les éléments qui, bien que nouveaux par rapport à ceux de la figure 2, ont une fonction semblable, portent la même référence à laquelle est ajoutée la lettre B. C'est ainsi que le dispositif de génération de retenue sur la ligne $\overline{CIN}$, $\overline{COUT}$ est constitué des trois transistors N-MOS 1, 2, 3, en série entre la ligne $\overline{COUT}$ et la masse. Il est toutefois nécessaire, comme c'est le cas ici, que le transistor placé du côté de la ligne $\overline{COUT}$ soit celui dont la grille est reliée à la connexion logique $\overline{P}$, alors que dans le schéma de la figure 2 l'ordre de mise en série des deux transistors 1 et 2 était indifférent. Alors de dispositif de génération de retenue pour la ligne $\overline{COUTBIS}$(i) peut n'être constitué que d'un seul transistor N-MOS 1B dont la grille est reliée à la connexion logique $\overline{P}$, et qui est branché avec son drain relié à ligne de propagation $\overline{COUTBIS}$(i) et sa source reliée à celle du transistor 1 dont le drain est relié à la ligne de propagation de retenue $\overline{COUT}$(i). Bien entendu il faut néanmoins un autre transistor supplémentaire 16B pour réaliser la précharge de la ligne $\overline{COUTBIS}$ à partir de la ligne "Prech". Les lignes C15 et C15BIS et les transistors 26, 26B servent à réaliser le choix entre les informations portées par les lignes $\overline{CIN}$, $\overline{CINBIS}$ pour le calcul de résultat, S(i) de l'étage, choix qui a été expliqué plus haut. Les lignes C15 et C15bis apportent donc la retenue de l'étage précédent, ou d'un groupe d'étages précédents, et l'inverse de cette retenue, respectivement, lorsque l'étage précédent a terminé ses calculs. Les transistors 26 et 26B dont les grilles sont respectivement reliées à la ligne C15 et à la ligne C15BIS, sont insérés entre la sortie des inverseurs, respectivement 17 et 17B, et la source du transistor 18. Selon la retenue de l'étage précédent, c'est donc l'un ou l'autre des transistors 26, 26B qui est passant et ceci a pour effet de sélectionner $\overline{CIN}$(i) ou $\overline{CINBIS}$(i), respectivement.

Les différents inverseurs mentionnés ne sont pas représentés en détail, leur réalisation étant parfaitement connue, par exemple dans la technologie dite C-MOS (un N-MOS et un P-MOS).

Il est clair que les termes "haut" et "bas" signifient respectivement "à l'alimentation" et "à la masse" et que si on employait des transistors de polarités respectivement inverses, le niveau "haut" serait seulement haut en valeur absolue.

## Revendications

1. Circuit constituant un étage d'une unité qui en comporte une pluralité, pour réaliser des opérations à partir de données d'entrée arithmétiques et/ou logiques binaires A et B, en prenant en compte une éventuelle retenue (CIN) provenant d'un étage précédent, et fournir un résultat de l'opération ainsi qu'une éventuelle retenue (COUT) à transmettre à l'étage suivant, comportant un dispositif programmable de prétraitement des données constitué d'un réseau de transistors MOS fournissant sur une connexion logique ($\overline{P}$) la combinaison logique $\overline{P} = \alpha .A.B + \beta .A.\overline{B} + \gamma.\overline{A}.B + \delta.\overline{A}.\overline{B}$, $\alpha$, $\beta$, $\gamma$, $\delta$, étant des paramètres de programmation, un dispositif de propagation de la retenue constitué d'un transistor MOS (15) inséré entre une entrée de retenue ($\overline{CIN}$) et une sortie de retenue ($\overline{COUT}$) d'une chaîne de propagation de la retenue d'un étage au suivant, la sortie de la chaîne étant en outre préchargée au cours d'un temps d'horloge dans chaque étage, un dispositif de génération de retenue exclusive de la propagation, qui comporte un transistor de décharge de la chaîne (1), et un dispositif engendrant le résultat logique du circuit (6-13), caractérisé en ce que le dispositif de génération de retenue est constitué d'au moins deux transistors MOS (1, 2), en série entre la sortie de la chaîne de propagation de retenue ($\overline{COUT}$) et un point de potentiel correspondant au niveau logique bas, dont les grilles sont reliées respectivement à l'une des entrées de données (A) et à la connexion portant ladite combinaison logique ($\overline{P}$), et en ce que le transistor de propagation de retenue (15) a sa grille reliée par un inverseur (4) à ladite connexion portant la combinaison logique ($\overline{P}$).

2. Circuit selon la revendication 1, prévu pour mettre en oeuvre un dispositif de sélection de retenue, en comportant à cet effet deux chaînes de propagation de retenue (CIN, CINBIS) et deux dispositifs de génération de retenue, caractérisé en ce que, l'un de ces deux dispositifs étant constitué des deux susdits transistors MOS (1,2), en série entre la première chaîne de propagation (CIN, COUT) et le potentiel logique bas, la grille du transistor (1) dont le drain est directement relié à cette chaîne (CIN, COUT) étant reliée à la connexion logique ($\overline{P}$), l'autre dispositif de génération est constitué d'un seul transistor (1B) dont la grille est également reliée à la connexion logique ($\overline{P}$) et qui est branché entre l'autre chaîne de propagation (CINBIS, COUTBIS) et la source du transistor (1) dont le drain est relié à la première chaîne de propagation.

3. Circuit selon l'une des revendications 1 ou 2, dans lequel le réseau de transistors de prétraitement de données est constitué de quatre liaisons, chacune reliant l'une de quatre lignes de programmation ($\alpha$, $\beta$, $\gamma$, $\delta$) à la connexion portant ladite combinaison logique ($\overline{P}$), chacune de ces liaisons comportant au moins l'espace drain-source d'un transistor MOS, caractérisé en ce que deux des liaisons ($\alpha$, $\gamma$) comportent deux transistors en série alors que les deux autres liaisons ($\beta$, $\delta$) ne comportent qu'un transistor, reliant chacun une ligne de programmation au point milieu des deux transistors d'une des liaisons à deux transistors.

4. Circuit selon l'une des revendications 1 ou 2, caractérisé en ce que l'inverseur (4) qui relie ladite ligne portant la combinaison logique ($\overline{P}$) à la grille du transistor de propagation de retenue (15) a son entrée reliée à une source de tension au niveau logique haut ($V_{DD}$) par un transistor (5) de polarité opposée à celle des transistors du réseau logique (6-13) et de propagation (15, 15B), et dont la grille est reliée à la sortie dudit inverseur (4).

**Claims**

1. A circuit which forms a stage of a unit which comprises a plurality of such stages in order to perform operations on the basis of arithmetical and/or logic binary input data A ad B while taking into account any carry (CIN) from a preceding stage, and to supply an operation result as well as a carry (COUT), if any, to be applied to the next stage, which circuit includes a programmable data preprocessing device which is formed by a network of MOS transistor which supply the logic combination $\overline{P} = \alpha.A.B + \beta.A.\overline{B} + \gamma.\overline{A}.B + \delta.\overline{A}.\overline{B}$. on a logic connection ($\overline{P}$), where $\alpha$, $\beta$, $\gamma$, $\delta$ are programming parameters, a carry-propagation device which is formed by a MOS transistor (15) inserted between a carry input ($\overline{CIN}$) and a carry output ($\overline{COUT}$) of a chain for propagating the carry from one stage to the next stage, the output of the chain being, moreover, precharged during a clock period in each stage, a propagation-excepted carry generation device which comprises a transistor (15) for discharging the chain, and a device for generating the logic result of the circuit (6-13), characterized in that the carry-generation device is formed by at least two MOS transistors (1, 2) which are connected in serles between the output of the carry-propagation chain ($\overline{COUT}$) and a point carrying a potential which corresponds to the logic low level, the gates of which are connected to one of the data inputs (A) and the connection carrying said logic combination ($\overline{P}$), respectively, the gate of the carry-propagation transistor (15) being connected, via an inverter (14), to said connection carrying the logic combination.

2. A circuit as claimed in Claim 1 and intended for implementing a carry-selection device for which purpose it comprises two carry-propagation chains (CIN, CINBIS) and two carry-generation devices, characterized in that one of these two devices is formed by said two MOS transistors (1, 2) which are connected in series between the first propagation chain (CIN, COUT) and the low logic potential, the gate of the transistor (1) whose drain is connected directly to said chain (CIN, COUT) being connected to said logic connection ($\overline{P}$), the other generation device being formed by a single transistor (1B) whose gate is also connected to said logic connection ($\overline{P}$) and which is inserted between the other propagation chain (CINBIS, COUTBIS) and the source of the transistor (1) whose drain is connected to the first propagation chain.

3. A circuit as claimed in any one of the Claims 1 or 2, in which the network of data preprocessing transistors is formed by four connections, each of which connects one of the four programming lines ($\alpha$, $\beta$, $\gamma$, $\delta$) to the connection carrying said logic combination ($\overline{P}$), each of said connections comprising at least the drain-source path of a MOS transistor, characterized in that two of the connections ($\alpha$, $\gamma$) comprise two transistors which are connected in series whilst the other two connections ($\beta$, $\delta$) comprise only one transistor, each time connecting a programming line to the centre point of the two transistors of one of the two-transistor connections.

4. A circuit as claimed in any one of the Claims 1 or 2, characterized in that the inverter (4) which connects said line carrying the logic combination ($\overline{P}$) to the gate of the propagation transistor (15) has its input connected to a source for a voltage $V_{DD}$) having the high logic level via a transistor (5) whose polarity opposes that of the transistors of the logic (6-13) and propagation (15, 15B) network, and whose gate is connected to the output of said inverter (4).

**Patentansprüche**

1. Schaltung, die eine Stufe bildet einer Einheit mit mehreren solchen Stufen, wobei die Stufe zur Durchführung von Bearbeitungen an arithmetischen und/oder logischen binären Eingangsdaten A und B unter Berücksichtigung eines möglichen Übertrags (CIN) aus einer vorangehenden Stufe und zur Lieferung eines Ergebnisses der Bearbeitung sowie eines möglichen an die folgende Stufe weiterzuleitenden Übertrags (COUT) dient, wobei diese Stufe eine aus einem MOS-Transistornetzwerk bestehende programmierbare Datenvorbearbeitungseinrichtung, die auf einer logischen Knotenpunkt ($\overline{P}$) die logische Verknüpfung
$\overline{P} = \alpha$ .A.B + $\beta$ .A.$\overline{B}$ + $\gamma$.$\overline{A}$.B + $\delta$.$\overline{A}$.$\overline{B}$ liefert, wobei $\alpha$, $\beta$, $\gamma$, $\delta$ Programmierparameter sind, eine Fortpflanzungsrichtung für den Übertrag, die aus einem MOS-Transistor (15) zwischen einem Übertragseingang ($\overline{CIN}$) und einem Übertragsausgang ($\overline{COUT}$) einer Kette zum Fortpflanzen des Übertrags von einer Stufe zur folgenden besteht, wobei der Kettenausgang außerdem in jeder Stufe im Laufe des Taktes vorgeladen wird, eine Übertragserzeugungseinrichtung ohne Fortpflanzung mit einem Kettenentladungstransistor (1) und eine das logische Ergebnis der Schaltung (6-13) erzeugende Einrichtung enthält, dadurch gekennzeichnet, daß die Übertragserzeugungseinrichtung wenigstens aus zwei zwischen dem Ausgang der Übertragsfortpflanzungskette
($\overline{COUT}$) und eine dem niedrigen logischen Pegel entsprechenden Potentialpunkt in Reihe geschaltete MOS-Transistoren (1, 2), deren Gatter mit einem der Dateneingänge (A) bzw. mit der die logische Verknüpfung ($\overline{P}$) führenden Verbindung verbunden sind besteht, und daß der Fortpflazungstransistor (15) mit seinem Gatter über eine Umkehrstufe (4) an die die logische Verknüpfung ($\overline{P}$) führende Knotenpunkt angeschlossen ist.

2. Schaltung nach Anspruch 1 zum Einschalten einer Übertragswähleinrichtung und mit dazu vorgesehenen zwei Übertragsfortpflanzungsketten (CIN, CINBIS) und zwei Übertragserzeugungseinrichtungen, dadurch gekennzeichnet, daß eine dieser beiden Einrichtungen aus zwei vorgenannten MOS-Transistoren (1, 2) in Reihe zwischen der ersten Fortpflanzungskette (CIN, COUT) und dem niedrigen logischen Potential besteht, wobei das Gatter des Transistors (1), dessen Abzug mit dieser Kette (CIN, COUT) direkt verbunden ist, an die logische Knotenpunkt ($\overline{P}$) angeschlossen ist, und der andere Erzeugungseinrichtung aus einem einzigen Transistor (18) besteht, dessen Gatter ebenfalls mit der logischen Knotenpunkt ($\overline{P}$) direkt verbunden ist und zwischen der anderen Fortpflanzungskette (CINBIS, COUTBIS) und der Quelle des Transistors (1) angezapft ist, dessen Abzug mit der ersten Fortpflanzungskette verbunden ist.

3. Schaltung nach einem der Ansprüche 1 oder 2, in der das Transistorennetzwerk von der Datenvorbearbeitungseinrichtung aus vier Verbindungen besteht, die je eine der vier Programmierleitungen ($\alpha$, $\beta$, $\gamma$, $\delta$) mit dem Knotenpunkt verbindet, der die logische Verknüpfung ($\overline{P}$) führt, wobei jede dieser Verbindungen wenigstens die Abzug-Quellenstrecke eines MOS-Transistors umfaßt, dadurch gekennzeichnet, daß zwei der Verbindungen ($\alpha$, $\gamma$) zwei reihengeschaltete Transistoren enthalten, während die beiden anderen Verbindungen ($\beta$, $\delta$) nur einen Transistor enthalten, die je eine Programmierleitung an die Mittelanzapfung der zwei Transistoren einer der Verbindungen mit zwei Transistoren anschließen.

4. Schaltung nach einem der Ansprüche 1 oder 2, dadurch gekennzeichnet, daß die Umkehrstufe (4), die die der logischen Verknüpfung ($\overline{P}$) führende Knotenpunkt an das Gatter des Fortpflanzungstransistors (15) anschließt, mit ihrem Eingang an eine Spannungsquelle mit hohem logischem Pegel ($V_{DD}$) über einen Transistor (5) angeschlossen ist, dessen Polarität der der Transistoren des logischen Netzes (6 - 13) und der Fortpflanzungstransistor (15, 15B) entgegengesetzt ist, und dessen Gatter mit dem Ausgang der Umkehrstufe (4) verbunden ist.

EP 0 239 168 B1

FIG.1

FIG.2

FIG.3